# EUROPÄISCHE PATENTANMELDUNG

(11) **EP 0 883 053 A2**
(43) Veröffentlichungstag der Anmeldung: **09.12.1998**
(21) Anmeldenummer: 98201782.4
(22) Anmeldetag: 28.05.1998
(51) Int. Cl.: G06F 3/023, G06F 3/033

(54) **System zur menügeführten Befehlseingabe**

(30) Priorität: 06.06.1997 DE 19723815
(71) Anmelder: Philips Patentverwaltung GmbH, 22335 Hamburg (DE); Koninklijke Philips Electronics N.V., 5621 BA Eindhoven (NL)
(72) Erfinder: Völkel, Andreas, c/o Philips Patentverwaltung GmbH, 22335 Hamburg (DE)
(74) Vertreter: Poddig, Dieter, Dipl.-Ing.

(57) **Zusammenfassung**

Beschrieben wird ein System zur menügeführten Befehlseingabe mit
- einer Steuereinheit,
- einer von der Steuereinheit gesteuerten Anzeigeeinheit zur symbolhaften Darstellung wenigstens einer Befehlswahlliste (Menü), die eine Anzahl von Befehlen und/oder Unterauswahllisten (Untermenüs) umfaßt, wobei jedes Untermenü Befehle und/oder weitere Untermenüs enthält, und wobei aus dem Menü bzw. Untermenü durch einen Benutzer ein Untermenü oder ein Befehl zur Ausführung bzw. weiteren Auswahl anwählbar ist, und
- einer mit der Steuereinheit verbundenen Bedieneinheit, durch deren Betätigung das Anwählen und/oder die Ausführung der Menüs, Untermenüs bzw. Befehle durch den Benutzer vorgenommen wird.

Zur einfachen und ergonomisch günstigen Bedienung umfaßt die Bedieneinheit zwei Wahltasten und eine Ausführungstaste. Durch die Wahltasten können Menüs, Untermenüs bzw. Befehle angewählt werden, durch die Ausführungstaste kann ein angewählter Befehl ausgeführt bzw. ein angewähltes Menü bzw. Untermenü bestimmt, bzw. das Anwählen beendet werden. Die Art der Funktion der Ausführungstaste wird durch die Dauer ihrer Betätigung bestimmt.

## Beschreibung

Die Erfindung bezieht sich auf ein System zur menügeführten Befehlseingabe mit
- einer Steuereinheit,
- einer von der Steuereinheit gesteuerten Anzeigeeinheit zur symbolhaften Darstellung wenigstens einer Befehlswahlliste (Menü), die eine Anzahl von Befehlen und/oder Unterauswahllisten (Untermenüs) umfaßt, wobei jedes Untermenü Befehle und/oder weitere Untermenüs enthält, und wobei aus dem Menü bzw. Untermenü durch einen Benutzer ein Untermenü oder ein Befehl zur Ausführung bzw. weiteren Auswahl anwählbar ist, und
- einer mit der Steuereinheit verbundenen Bedieneinheit, durch deren Betätigung das Anwählen und/oder die Ausführung der Menüs, Untermenüs bzw. Befehle durch den Benutzer vorgenommen wird.

Aus der US-A 5,425,140 ist ein Computersystem und ein Verfahren zum Betreiben dieses Computersystems bekannt, die eine graphische Benutzeroberfläche umfassen. Diese graphische Benutzeroberfläche enthält eine Methode zur bedingungsabhängigen, kaskadierten Menüführung. Das damit betriebene Computersystem schützt Anfänger davor, durch eine Vielzahl auf dem Computerbildschirm erscheinender, fortgeschrittener Operationen überwältigt zu werden. Die bedingungsabhängige, kaskadierte Gliederung ermöglicht es dem Benutzer, eine Grundfunktion oder einen Basisbefehl aus einem Hauptmenü auf dem Bildschirm zu wählen. In diesem Fall wird der Standardablauf der Funktion durchgeführt. Durch "drücken" einer "Taste", die benachbart zum Text jedes Menüpunktes auf dem Bildschirm dargestellt wird, kann der Benutzer wahlweise ein Untermenü aller Formen von Funktionen oder Befehlen darstellen. Dabei wird der Standardablauf oder der Standardpunkt innerhalb des Untermenüs durch ein Prüfzeichen neben dem Standardsymbol im Untermenü markiert. Jedesmal, wenn der Benutzer einen Untermenüpunkt wählt, der vom Standard-Untermenüpunkt abweicht, wird der gerade gewählte Untermenüpunkt zum Standardmenüpunkt oder Standardablauf.

Eine derartige Menüführung ist vorgesehen für einen Betrieb auf einem "Personal Computer", der üblicherweise einen Systemprozessor, einen Bildschirm, eine Tastatur, ein oder mehrere Diskettenlaufwerke, ein Festplattenlaufwerk und wahlweise einen Drucker umfaßt. Wahlweise gehört zu diesem Rechnersystem auch eine Maus als Eingabegerät.

Die mit dem bekannten Computersystem mögliche, menügeführte Befehlseingabe erweist sich für eine Vielzahl unterschiedlicher Ceräte zur elektronischen Signalverarbeitung als vorteilhaft, weil damit auch komplexe Befehlseingabe oder Parametereinstellungen vom Benutzer ohne umfangreiche Vorkenntnisse durchgeführt werden können. Allerdings ist für eine Reihe solcher Anwendungen die Verwendung der für Computersysteme üblichen Eingabegeräte konstruktiv und bedienungstechnisch zu aufwendig.

Die Erfindung hat die Aufgabe, ein System zur menügeführten Befehlseingabe zu schaffen, welches einfach aufgebaut und auch für einen ungeübten Benutzer leicht bedienbar ist.

Erfindungsgemäß wird diese Aufgabe bei einem System der eingangs genannten Art dadurch gelöst, daß die Bedieneinheit umfaßt:
- eine erste Wahltaste zum Anwählen eines in einer vorgegebenen Reihenfolge der Darstellung auf der Anzeigeeinheit zum jeweils angewählten Menü, Untermenü bzw. Befehl voraufgehenden Menüs, Untermenüs bzw. Befehls,
- eine zweite Wahltaste zum Anwählen eines in einer vorgegebenen Reihenfolge der Darstellung auf der Anzeigeeinheit zum jeweils angewählten Menü, Untermenü bzw. Befehl nachfolgenden Menüs, Untermenüs bzw. Befehls,
- eine Ausführungstaste
   -- zum Ausführen eines angewählten Befehls bzw. Bestimmen eines angewählten Menüs bzw. Untermenüs, wenn die Dauer der Betätigung der Ausführungstaste innerhalb einer ersten Zeitspanne liegt, wobei aus einem so bestimmten Menü bzw. Untermenü im folgenden durch Betätigen der Wahltasten Untermenüs bzw. Befehle anwählbar sind, und
   -- zum Beenden des Anwählens ohne Ausführung eines Befehls, wenn die Dauer der Betätigung der Ausführungstaste innerhalb einer zweiten Zeitspanne liegt.

Bei dem erfindungsgemäßen System wird somit die menügeführte Befehlseingabe auf die Bedienung von lediglich 3 Tasten beschränkt. Trotzdem ist das erfindungsgemäße System sehr gut an die flexible hierarchische Struktur eines Menüs angepaßt. Seine Bedienung ist leicht erlernbar und ergonomisch günstig, da es auf eine intuitive Handhabung zugeschnitten ist. Der Benutzer wird in die Lage versetzt, das System über die 3 Tasten zu bedienen, ohne den Blick von der Anzeigeeinheit zu nehmen. Tatsächlich kann damit jede beliebige Menüstruktur intuitiv bedient werden.

Ergänzend kann das Anwählen mit den Wahltasten in an sich bekannter Weise ebenfalls durch die Dauer der Betätigung der betreffenden Wahltaste steuerbar sein. So kann in der vorgegebenen Reihenfolge der Darstellung auf der Anzeigeeinheit zum jeweils unmittelbar benachbarten Menü, Untermenü bzw. Befehl übergegangen werden, wenn die Dauer der Betätigung der zugehörigen Wahltaste innerhalb einer dritten Zeitspanne liegt, und es kann ein automatisches, schnelles Fortschreiten in der genannten Reihenfolge erfolgen, wenn die Dauer der Betätigung der zugehörigen Wahltaste innerhalb einer vierten Zeitspanne liegt. Vorzugsweise kann die dritte oder vierte Zeitspanne mit der ersten oder zweiten Zeitspanne übereinstimmen.

In einer vorteilhaften Ausführungsform der Erfindung ist die Ausführungstaste räumlich zwischen den Wahltasten derart angeordnet, daß alle drei Tasten vom Benutzer mit drei benachbarten Fingern einer Hand bedienbar sind. Diese Tastenanordnung macht ein wiederholtes Suchen der Tasten bei der Bedienung entbehrlich und erleichtert somit die intuitive Betätigung sowie die Konzentration des Blickes des Benutzers auf die Anzeigeeinheit. Ferner kann das Aufsuchen der Tasten dadurch erleichtert werden, daß wenigstens eine von ihnen habtisch identifizierbar ausgebildet ist. Das Aufsuchen der Tasten ist damit ohne Blickkontakt ermöglicht.

Eine Erleichterung der Bedienung im Sinne verbesserter Ergonomie kann auch dadurch erreicht werden, daß die Bedieneinheit zur Anzeigeeinheit benachbart, vorzugsweise in Gebrauchslage unmittelbar unter derselben, angeordnet ist.

Das erfindungsgemäße System ist bei einer Vielzahl von Geräten zur elektronischen Sighalverarbeitung zur menügeführten Befehlseingabe einsetzbar. Ein bevorzugtes Einsatzgebiet stellt die Bedienung von Rundfunkgeräten, insbesondere für die Verwendung in Kraftfahrzeugen, dar.

Ein Ausführungsbeispiel der Erfindung ist in der Zeichnung dargestellt und wird im nachfolgenden näher beschrieben. Es zeigen
- Fig. 1: eine blockschematische Darstellung eines erfindungsgemäßen Systems zur menügeführten Befehlseingabe und
- Fig. 2: ein Beispiel einer Menüstruktur.

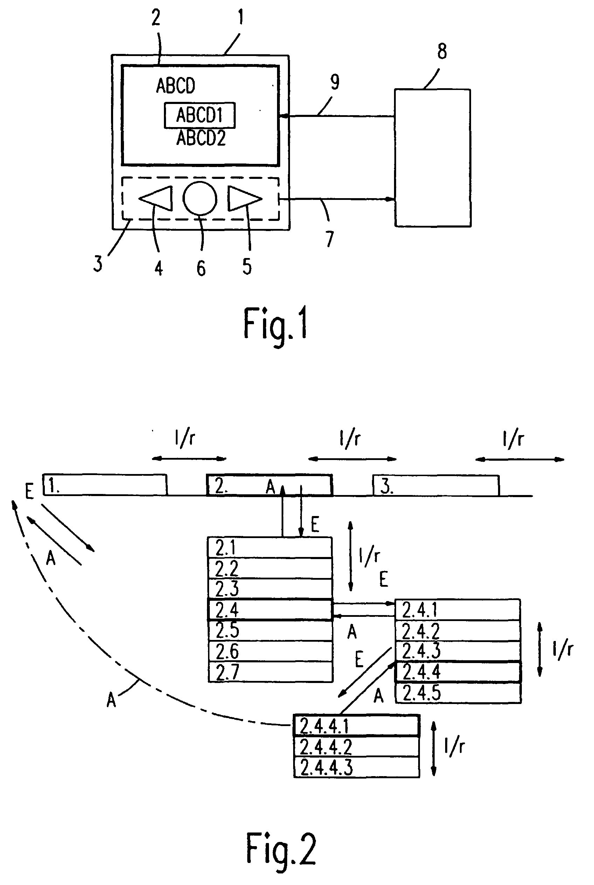

In Fig. 1 ist mit dem Bezugszeichen 1 ein beispielhaftes Geräte-Bedienfeld schematisch wiedergegeben, in dessen - in Gebrauchslage betrachtet - oberem Teil eine Anzeigeeinheit 2 und in dessen unterem Teil eine Bedieneinheit 3 angeordnet sind. Die Bedieneinheit 3 umfaßt eine erste Wahltaste 4, eine zweite Wahltaste 5 und eine Ausführungstaste 6. Die Bedieneinheit 3 ist über eine Leitung 7 mit einer Steuereinheit 8 verbunden, die außerdem über eine weitere Leitung 9 mit der Anzeigeeinheit 2 verbunden ist. In der Steuereinheit 8 ist wenigstens eine Befehlauswahlliste (Menü) gespeichert, die eine Anzahl von Befehlen und/oder Unterauswahllisten (Untermenüs) umfaßt. Dabei enthält jedes Untermenü Befehle und/oder weitere Untermenüs, und aus dem Menü bzw. Untermenü kann durch einen Benutzer ein Untermenü oder ein Befehl zur Ausführung bzw. weiteren Auswahl angewählt werden. Die Menüs, Untermenüs bzw. Befehle werden von der Steuereinheit in Form eines Datensignals über die weitere Leitung 9 der Anzeigeeinheit 2 zugeleitet und dort symbolhaft dargestellt. Die Darstellung und die Ausführung der Menüs, Untermenüs bzw. Befehle wird durch die Bedieneinheit 3 gesteuert, und zwar durch die Wahltasten 4,5 und die Ausführungstaste 6. Zur Übermittlung entsprechender Befehlssignale von der Bedieneinheit 3 an die Steuereinheit 8 dient die Leitung 7.

Fig. 2 zeigt grob schematisch ein Beispiel einer Menüstruktur, wie sie durch die Anordnung nach Fig. 1 bearbeitet werden kann. Dargestellt ist ein Ausschnitt aus einem beispielhaften Menü, der drei Untermenüs 1.,2. und 3. umfaßt. Durch die verstärkt gezeichnete Umrahmung des Untermenüs 2. wird angedeutet, daß dieses Untermenü durch Betätigen der Wahltasten 4, 5 angewählt worden ist. Dazu werden die Wahltasten 4 bzw. 5 sooft betätigt, bis - ausgehend von einer Anfangssituation - das Untermenü 2. angewählt ist. Vorzugsweise wird diese Anwahl auf der Anzeigeeinheit 2 optisch hervorgehoben, wie in Fig. 1 durch eine Umrahmung angedeutet wurde. Durch Betätigen der ersten Wahltaste 4, die von allen drei Tasten der Bedieneinheit 3 am weitesten links angeordnet ist, kann vom gerade angewählten Untermenü zum in der dargestellten Reihenfolge vorhergehenden Untermenü, hier dem Untermenü 1., übergegangen werden. Durch Betätigen der zweiten Wahltaste 5, in der Bedieneinheit 3 rechts angeordnet, kam vom angewählten Untermenü 2. zum nachfolgenden Untermenü 3. übergegangen, d.h. dieses angewählt werden.

Entsprechend lassen sich bei einer größeren Anzahl von Untermenüs alle durch entsprechendes Betätigen der Wahltasten 4,5 anwählen. Dies ist durch die Pfeilsymbole mit der Kennzeichnung "l/r" in Fig. 2 wiedergegeben.

Im Beispiel nach Fig. 2 wird das Untermenü 2. als detaillierter darzustellendes Untermenü bestimmt. Dazu wird die Ausführungstaste 6, in der Mitte zwischen den Wahltasten 4,5 in der Bedieneinheit 3 angeordnet, für eine Dauer betätigt, die innerhalb einer ersten Zeitspanne liegt. Beispielsweise wird auf der Anzeigeeinheit 2 das so bestimmte Untermenü mit all seinen weiteren Untermenüs 2.1 bis 2.7 dargestellt. Vorzugsweise wird zugleich das erste weitere Untermenü 2.1 angewählt, so daß dieses bevorzugt auf der Anzeigeeinheit 2 optisch hervorgehoben wird. Durch Betätigen der zweiten Wahltaste 5 kann nun das zweite weitere Untermenü 2.2. angewählt werden. Weitere Betätigungen der zweiten Wahltaste 5 führen zum Anwählen nacheinander der weiteren Untermenüs 2.3 bis 2.7. Auch dies ist durch eine hier senkrecht angeordnete Pfeilmarkierung "l/r" angedeutet. Im Beispiel nach Fig. 2 ist das weitere Untermenü 2.4 angewählt.

Wird nun wiederum die Ausführungstaste 6 in gleicher Weise wie das oben beschriebene erste Mal betätigt, wird das weitere Untermenü 2.4 zur noch weiter aufgeschlüsselten Darstellung bestimmt. Im Beispiel nach Fig. 2 sind die Betätigungen der Ausführungstaste 6 durch ein mit "E" bezeichneten Pfeil angedeutet. In der Menüstruktur gelangt man nun zu einem dem weiteren Untermenü 2.4 untergeordneten Satz von weiteren Untermenüs 2.4.1 bis 2.4.5, aus denen durch die Wahltasten 4, 5 eines ausgewählt und zur noch weiteren Aufschlüsselung bestimmt werden kann.

Dieser letzte Schritt der Aufschlüsselung, wiederum mit der Ausführungstaste 6 durchgeführt und mit einem Pfeil "E" symbolisiert, führt zu einer Liste von Befehlen 2.4.4.1 bis 2.4.4.3, von denen im dargestellten Beispiel der erste Befehl 2.4.4.1 angewählt ist. Wird nun wiederum die Ausführungstaste 6 in der beschriebenen Weise betätigt, wird der auf die vorstehend beschriebene Weise angewählte und bestimmte Befehl ausgeführt.

Aus jeder Position innerhalb der dargestellten Menüstruktur kann an deren Ausgangspunkt zurückgekehrt werden, und zwar ebenfalls durch Betätigen der Ausführungstaste 6, jetzt allerdings für eine Zeitdauer, die innerhalb einer zweiten Zeitspanne liegt. Während die erstgenannte Betätigung der Ausführungstaste 6 auch als Eingabe bezeichnet werden kann, wird die zuletzt beschriebene Betätigung als Abbruch bezeichnet. Durch einen solchen Abbruch gelangt man in der Menüstruktur entweder in das übergeordnete Untermenü bzw. Menü, oder wahlweise ohne Zwischenstufen zum Ausgangspunkt des gesamten Menüs oder aller vorhandenen Menüs. In Fig. 2 bedeutet dies, daß durch einen solchen Abbruch, als Pfeil "A" symbolisiert, beispielsweise vom Befehl 2.4.4.1 zum Untermenü 2.4.4. zurückgekehrt wird. Ein nochmaliges Auslösen eines Abbruchs führt dann zum Untermenü 2.4, ein dritter Abbruch schließlich zum Untermenü 2.1. in der "obersten Ebene" der dargestellten Menüstruktur. Andererseits kann die Steuereinheit 8 auch so ausgebildet sein, daß durch einmaligen Abbruch aus einem beliebigen Punkt der Menüstruktur grundsätzlich sofort an den Ausgangspunkt aller vorhandenen Menüs zurückgekehrt wird. Ein so ausgelegter Abbruch, in Fig. 2 mit einer strichpunktierten Linie symbolisiert, hätte in der Menüstruktur dasselbe Ziel wie der neben dem Untermenü 1. dargestellte Abbruch.

Bei einer derartigen Menüstruktur sind gesonderte Menüpunkte "Abbruch" nicht mehr erforderlich. Vielmehr kann die Funktion "Abbruch" aus jeder Position im Menü bzw. den Untermenüs vorgenommen werden. Damit entfällt auch ein "Suchen" nach dem Ausgang "der Befehlseingabe".

In jeder Position in der Menüstruktur kann eindeutig zwischen einem "Blättern" im Menü bzw. den Untermenüs und dem tatsächlichen Bestimmen, d.h. letzlich dem Ausführen des angewählen Befehls, unterschieden werden. Wird die erfindungsgemäße Befehlseingabe zur Prametereinstellung eines elektronischen Geräts verwendet, läßt sich somit ohne tatsächliche Einstellung bzw. Veränderung eines Parameters eine Auswahl zwischen allen möglichen Parametern vornehmen, bevor dann tatsächlich eine Änderung einer Einstellung des elektronischen Gerätes erfolgt.

Die Tasten 4, 5, 6 werden bevorzugt durch Zeige-, Mittel- bzw. Ringfinger betätigt und sind entsprechend ausgeformt. Mit Zeige- und Ringfinger werden über die Wahltasten 4,5 die Menüpunkte, Untermenüpunkte und somit beispielsweise Parameter und Parameterwerte ausgewählt. Über den Mittelfinger wird durch die Ausführungstaste 6 je nach Dauer der Betätigung entweder eine Auswahl bzw. ein Speichern eines Wertes, eines Parameters, eines Menüpunktes bzw. eines Befehls vorgenommen, oder es wird durch Abbruch ein Untermenü bzw. ein Menü ohne Auswahl (d.h. Bestimmen) bzw. Speichern des zuletzt angezeigten Wertes bzw. Befehls bzw. ohne Änderung eines Parameters verlassen. Beispielsweise wird für eine Eingabe die Ausführungstaste 6 länger als eine halbe Sekunde gedrückt gehalten, während für einen Abbruch die Ausführungstaste 6 kürzer als eine halbe Sekunde gedrückt wird.

## Patentansprüche

1. System zur menügeführten Befehlseingabe mit
- einer Steuereinheit,
- einer von der Steuereinheit gesteuerten Anzeigeeinheit zur symbolhaften Darstellung wenigstens einer Befehlauswahlliste (Menü), die eine Anzahl von Befehlen und/oder Unterauswahllisten (Untermenüs) umfaßt, wobei jedes Untermenü Befehle und/oder weitere Untermenüs enthält, und wobei aus dem Menü bzw. Untermenü durch einen Benutzer ein Untermenü oder ein Befehl zur Ausführung bzw. weiteren Auswahl anwählbar ist, und
- einer mit der Steuereinheit verbundenen Bedieneinheit, durch deren Betätigung das Anwählen und/oder die Ausführung der Menüs, Untermenüs bzw. Befehle durch den Benutzer vorgenommen wird,
dadurch gekennzeichnet,
daß die Bedieneinheit umfaßt:
- eine erste Wahltaste mm Anwählen eines in einer vorgegebenen Reihenfolge der Darstellung auf der Anzeigeeinheit zum jeweils angewählten Menü, Untermenü bzw. Befehl voraufgehenden Menüs, Untermenüs bzw. Befehls,
- eine zweite Wahltaste zum Anwählen eines in einer vorgegebenen Reihenfolge der Darstellung auf der Anzeigeeinheit zum jeweils angewählten Menü, Untermenü bzw. Befehl nachfolgenden Menüs, Untermenüs bzw. Befehls,
- eine Ausführungstaste
-- zum Ausführen eines angewählten Befehls bzw. Bestimmen eines angewählten Menüs bzw. Untermenüs, wenn die Dauer der Betätigung der Ausführungstaste innerhalb einer ersten Zeitspanne liegt, wobei aus einem so bestimmten Menü bzw. Untermenü im folgenden durch Betätigen der Wahltasten Untermenüs bzw. Befehle anwählbar sind, und
-- zum Beenden des Anwählens ohne Ausführung eines Befehls, wem die Dauer der Betätigung der Ausführungstaste innerhalb einer zweiten Zeitspanne liegt.

2. System nach Anspruch 1, dadurch gekennzeichnet,
daß die Ausführungstaste räumlich zwischen den Wahltasten derart angeordnet ist, daß alle drei Tasten vom Benutzer mit drei benachbarten Fingern einer Hand bedienbar sind.

3. System nach Anspruch 1, dadurch gekennzeichnet,
wenigstens eine der Tasten haptisch identifizierbar ausgebildet ist.

4. System nach Anspruch 1, dadurch gekennzeichnet,
daß die Bedieneinheit zur Anzeigeeinheit benachbart, vorzugsweise in Gebrauchslage unmittelbar unter derselben, angeordnet ist.

5. Gerät zur elektronischen Signalverarbeitung, gekennzeichnet durch
ein System nach einem der vorhergehenden Ansprüche.
